Europäisches Patentamt

(19) European Patent Office

Office européen des brevets

(11) Numéro de publication: **0 066 498**

**A1**

(12) **DEMANDE DE BREVET EUROPEEN**

(21) Numéro de dépôt: 82400907.0

(22) Date de dépôt: 17.05.82

(51) Int. Cl.³: **C 10 J 3/46**
**F 02 B 43/10, F 02 B 45/02**

---

(30) Priorité: 20.05.81 FR 8110011

(43) Date de publication de la demande:
08.12.82 Bulletin 82/49

(84) Etats contractants désignés:
CH DE FR GB IT LI SE

(71) Demandeur: BERTIN & CIE
Boîte Postale No. 3
F-78370 Plaisir(FR)

(72) Inventeur: Galant, Serge
52, Impasse de la Halte
F-78870 Bailly(FR)

(74) Mandataire: De Boisse, Louis
37, Avenue Franklin D. Roosevelt
F-75008 Paris(FR)

---

(54) Procédé et installation pour la gazéification ultra-rapide du charbon ou de la biomasse.

㊼ L'invention concerne un procédé de gazéification du charbon ou de la biomasse caractérisé en ce qu'il comprend les étapes consistant : (a) à introduire dans une chambre de réaction (8) de l'hydrogène gazeux, de l'oxygène gazeux et de fines particules de charbon, l'hydrogène étant présent en une proportion au moins stoechiométrique par rapport à la proportion d'oxygène, (b) à provoquer l'explosion du mélange d'hydrogène et d'oxygène, et (c) à retirer de la chambre de réaction un mélange formé principalement d'hydrogène et de monoxyde de carbone. Utilisation en vue de valoriser l'oxygène produit par l'electrolyse de l'eau, le mélange gazeux produit pouvant servir à la synthèse du méthanol.

FIG.: 1a

EP 0 066 498 A1

- 1 -

Procédé et installation pour la gazéification ultra-rapide du charbon ou de la biomasse.

L'invention concerne un procédé de gazéification ultra-rapide du charbon ou de la biomasse et une installation pour la mise en oeuvre de ce procédé.

Une utilisation possible de l'électricité excédentaire produite par les centrales nucléaires pendant les heures creuses est l'électrolyse de l'eau pour produire de l'hydrogène et de l'oxygène.

Cependant, alors que l'hydrogène peut être utilisé comme combustible, l'oxygène produit est difficilement valorisable, ce qui obère les données économiques d'une telle utilisation.

La présente invention a pour objet de fournir un procédé de gazéification du charbon ou de la biomasse qui permet d'utiliser l'oxygène produit par l'électrolyse de l'eau, tout en conservant l'hydrogène, avec production d'un mélange hydrogène/monoxyde de carbone convenant à la synthèse du méthanol, lequel, comme cela est bien connu, peut servir de carburant liquide pour les moteurs à combustion interne ou externe.

La Demanderesse a trouvé qu'il était possible de réa-

liser la réaction C + H$_2$0 $\longrightarrow$ CO + H$_2$ en faisant exploser, dans une chambre de combustion, un mélange d'hydrogène et d'oxygène à travers une suspension de fines particules de charbon ou de biomasse, la vapeur d'eau formée par cette explosion réagissant à haute température (environ 3000°K) avec le charbon en particules.

Plus particulièrement, l'invention concerne un procédé de gazéification du charbon ou de la biomasse qui comprend les étapes consistant :

a) à introduire dans une chambre de réaction de l'hydrogène gazeux, de l'oxygène gazeux et de fines particules de charbon ou de biomasse, l'hydrogène étant présent en une proportion au moins stoechiométrique par rapport à la proportion d'oxygène;

b) à provoquer l'explosion du mélange d'hydrogène et d'oxygène; et

c) à retirer de la chambre de réaction un mélange formé principalement d'hydrogène et de monoxyde de carbone.

Le procédé de l'invention peut être mis en oeuvre dans une chambre de réaction de volume constant, telle qu'une bombe, mais, selon un mode de mise en oeuvre préféré, on utilise comme chambre de réaction une chambre volumétrique comme celle d'un moteur à explosion. De préférence, on utilisera un moteur à 4 temps. L'emploi d'un moteur à 2 temps est possible mais moins avantageux en raison du balayage important de ce type de moteurs. En pratique, on utilisera avantageusement un moteur Diesel à 4 temps convenablement modifié, plutôt qu'un moteur à 4 temps à essence, en raison de la plus grande robustesse de construction des moteurs Diesel.

L'explosion du mélange d'hydrogène et d'oxygène peut être provoqué, par exemple, par une décharge électrique de faible puissance.

L'hydrogène et l'oxygène nécessaires au fonctionnement du procédé proviennent avantageusement d'une cellule d'électrolyse de l'eau, laquelle peut être alimentée à bon compte par de l'électricité produite pendant les heures creuses, par une centrale nucléaire.

Comme indiqué, la proportion d'hydrogène doit être au moins stoechiométrique par rapport à la proportion d'oxygène mais, de préférence, on utilisera un excès d'hydrogène afin d'assurer la réaction de tout l'oxygène présent. Il faut en effet veiller à ce que tout l'oxygène introduit dans la chambre de réaction réagisse avec l'hydrogène car tout oxygène résiduel réagirait ensuite avec le monoxyde de carbone formé par la réaction du carbone et de l'eau en donnant du gaz carbonique dénué d'intérêt, avec une réduction concomitante du rendement en monoxyde de carbone. Dans le calcul de la quantité d'hydrogène gazeux à amener à la réaction et dans le cas de la gazéification du charbon, il faut tenir compte de la teneur en hydrogène dudit charbon.

Suivant le rapport charbon ou biomasse/vapeur d'eau formée par la réaction explosive de $H_2$ et $O_2$, on peut obtenir une gazéification complète du charbon ou de la biomasse et un mélange gazeux sortant de la chambre de réaction dont la composition est directement adaptée à la synthèse du méthanol (rapport volumique $H_2$/CO voisin de 2).

Lorsqu'on utilise un moteur à explosion pour mettre en oeuvre le procédé de l'invention, on peut utiliser le travail fourni par le moteur pour le broyage du charbon ou de la biomasse qui nécessite une énergie de 30 KWh/tonne de produit solide environ et pour le transfert des gaz d'alimentation.

La grosseur des particules introduites dans la chambre de réaction est avantageusement comprise entre 50 et 100 microns, notamment dans le cas du charbon. On a trouvé que, à l'intérieur de cette gamme, la composition du mélange gazeux produit variait très peu. On pourrait, bien entendu, utiliser des particules plus fines que 50 microns, mais cela n'est pas économiquement avantageux.

Dans le cas de la gazéification de biomasse, on a pu utiliser des particules plus grosses (1 à 2 mm) avec des résultats du même ordre, mais avec l'inconvénient de la production de cendres de grosseur supérieure. Il pourrait donc y avoir intérêt à réduire la grosseur des particules de biomasse en dessous du millimètre, notamment dans le cas de l'emploi d'un moteur à explosion. Le rendement thermodynamique global du système (y compris l'énergie électrique nécessaire à l'électrolyse de l'eau) est de l'ordre de 0,7, ce qui est excellent.

L'invention apporte une solution extrêmement intéressante au problème de l'utilisation des excédents d'électricité d'origine nucléaire produits pendant les heures ou périodes creuses, d'autant plus que le procédé de l'invention est peu dépendant de la teneur en cendres ou de la qualité du charbon ou de la biomasse.

Le tableau ci-après résume quelques résultats expérimentaux obtenus par gazéification de charbon et de biomasse dans une chambre de réaction de volume constant.

On voit que, dans le cas de la gazéification du charbon, on obtient des résultats du même ordre lorsqu'on utilise des particules d'une grosseur de 13 ou de 50$\mu$m. Il n'y a donc pas d'avantages à utiliser des particules très fines, plus coûteuses à produire.

Egalement, on peut observer que le meilleur rendement est obtenu pour un rapport massique C de 0,4, ce qui correspond à une proportion de carbone inférieure à la stoechiométrie (C = 0,66).

## T A B L E A U

| CHARBON Grosseur des particules | | | | | | |
|---|---|---|---|---|---|---|
| | 13 $\mu$m | | | 50 $\mu$m | | |
| $C^{(a)}$ | 0,4 | 1 | 2 | 0,4 | 1 | 2 |
| $R^{(b)}$ | 1 | 0,707 | 0,481 | 1 | 0,723 | 0,443 |
| $H_2$, % volume | 58,8 | 64,8 | 51,2 | 66,1 | 53,3 | 52,5 |
| CO, % volume | 35,2 | 31,7 | 32,2 | 30,2 | 37,2 | 36,2 |
| $CO_2$, % volume | 1,78 | 3,1 | 2,9 | 2,6 | 1,9 | 2,2 |
| $CH_4$, % volume | 2 | 0,05 | 5,8 | 0,09 | 2,6 | 6,5 |

| BIOMASSE (10% d'humidité initiale) Grosseur des particules comprise entre 1 et 2mm. | | | |
|---|---|---|---|
| $C^{(a)}$ | 0,556 | 1 | 2 |
| $R^{(b)}$ | 0,83 | 0,706 | 0,406 |
| $H_2$, % volume | 62,4 | 53,2 | 49,8 |
| CO, % volume | 27,3 | 33,9 | 32,7 |
| $CO_2$, % volume | 4,9 | 7 | 8,2 |
| $CH_4$, % volume | 2,3 | 5,2 | 6,7 |

(a) C = masse carbone/masse vapeur d'eau formée par la réaction $H_2 + O_2$

(b) r = rendement massique de gazéification

La description qui va suivre en regard des dessins annexés donnés à titre d'exemples non limitatifs, fera bien comprendre comment l'invention peut être réalisée, les particularités qui ressortent tant des dessins que du texte faisant, bien entendu, partie de ladite invention.

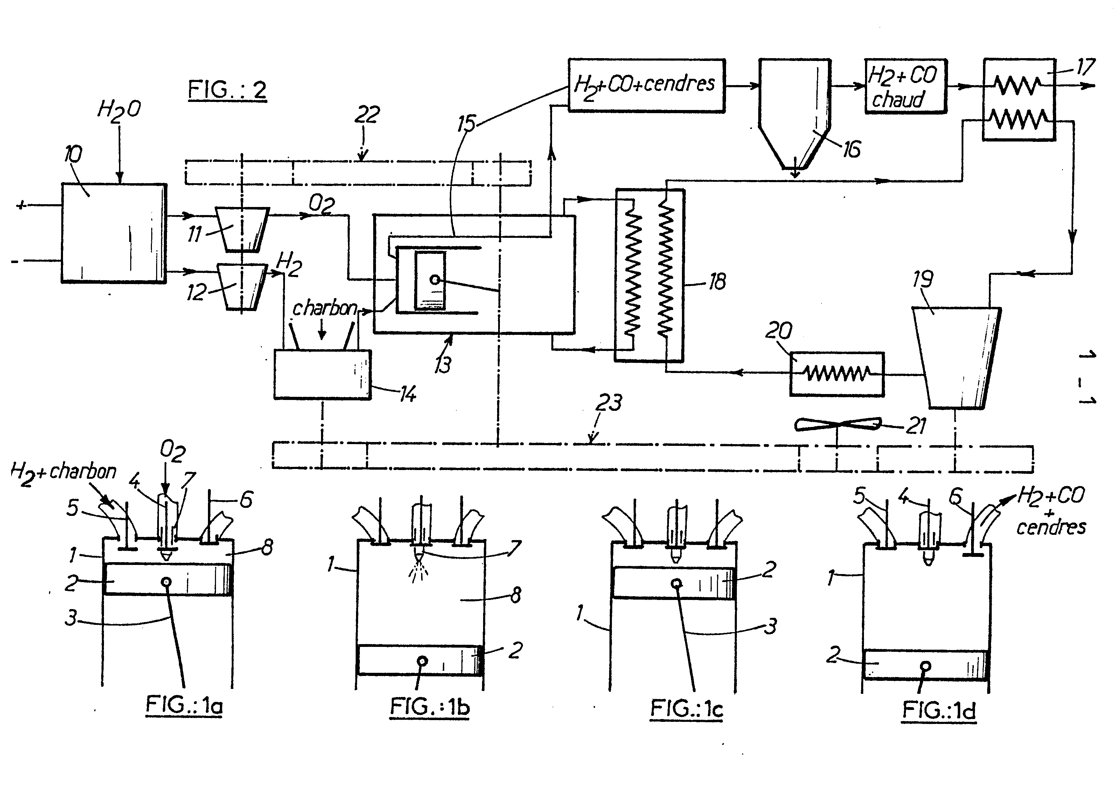

Les figures 1a à 1d illustrent schématiquement le mode de mise en oeuvre préféré du procédé de l'invention, et la figure 2 illustre schématiquement une installation complète de gazéification du charbon ou de la biomasse mettant en oeuvre le procédé de l'invention.

Sur les figures 1a à 1d est représenté, schématiquement, un moteur monocylindre à 4 temps convenablement modifié comprenant un cylindre 1 dans lequel se meut un piston 2 relié par une bielle 3 à un vilebrequin (non représenté). Au sommet du cylindre sont prévues trois soupapes 4, 5 et 6, actionnées de façon classique par un arbre à came, et une bougie 7. A la phase d'admission (figure 1a), les soupapes 4 et 5 sont ouvertes et la soupape 6 est fermée. De l'oxygène est admis dans la chambre de combustion 8 par la soupape 4. Un mélange de fines particules de charbon ou de biomasse en suspension dans de l'hydrogène est admis simultanément dans la chambre 8 par la soupape 5. A la phase de compression et d'explosion (figure 1b), les soupapes 4, 5 et 6 sont fermées et une étincelle est produite par la bougie 7 qui fait exploser le mélange hydrogène/oxygène. Cette réaction explosive élève la température de la chambre 8 à un niveau suffisant (de l'ordre de 3000°K) pour que les particules de charbon ou de biomasse réagissent avec la vapeur d'eau formée par la réaction explosive pour donner naissance à un mélange gazeux constitué principalement d'hydrogène et de monoxyde de carbone. A la phase de détente (figure 1c), les soupapes demeurent fermées et on utilise l'onde de détente pour fournir, par exemple, le travail mécanique nécessaire au broyage du charbon ou de la biomasse en fines particules et au transfert des gaz d'alimentation ($O_2$ et $H_2$). A la phase d'échappement (figure 1d), la soupape 6 est ouverte tandis que les soupapes 4 et 5 demeurent closes. Les gaz d'échappement ($H_2$, CO et les cendres éventuelles provenant des matières incombustibles contenues dans le charbon ou biomasse) sont évacués de la chambre 8. La température des gaz d'échappement est de l'ordre de 400°C.

Sur la figure 2 est représenté schématiquement une installation complète de gazéification du charbon ou de la biomasse basée sur le procédé de l'invention.

Cette installation comprend une unité 10 d'électrolyse de l'eau, pouvant être alimentée, par exemple, par de l'électricité d'origine nucléaire. L'oxygène et l'hydrogène produits par cette unité sont comprimés par des compresseurs 11 et 12 respectivement. L'oxygène sous pression est envoyé directement à un moteur monocylindre à 4 temps 13 du genre de celui qui vient d'être décrit à propos des figures 1a à 1d. L'hydrogène sous pression passe dans une unité de broyage 14 de charbon d'où il sort une suspension de fines particules de charbon ou de biomasse et d'hydrogène, que l'on amène au moteur 13. Le mélange gazeux chaud 15 ($H_2$ + CO + cendres) sortant du moteur 13 est envoyé dans un cyclone 16 pour le débarrasser des cendres. Le mélange gazeux chaud purifié sortant du cyclone passe dans un échangeur de chaleur 17, avant d'être envoyé dans une unité de synthèse du méthanol (non représentée). Les particules sortant du cyclone pourraient éventuellement être réintroduites dans la chambre de gazéification.

Le système comprend aussi un système de récupération à cycle de Rankine utilisant un fluide de travail organique. Ce système comprend un échangeur de la chaleur 18 dans lequel le fluide de travail organique est réchauffé par le fluide de refroidissement (eau) du moteur 13. Après passage dans l'échangeur 18, le fluide de travail organique passe dans l'échangeur 17 où il est vaporisé, puis se détend, par exemple dans une turbine 19 à fluide organique. A la sortie de la turbine, le fluide de travail organique passe dans un condenseur 20 avant de retourner dans l'échangeur 18.

Le travail fourni par le moteur 13 sert, en partie, à actionner les compresseurs 11 et 12 et, pour le reste, à entraîner l'unité de broyage 14. Le travail fourni par la turbine 19 contribue à entraîner l'unité de broyage 14, ainsi qu'un ventilateur 21 servant à refroidir le condenseur 20. Les jeux d'engrenages 22 et 23 servant à la transmission du travail mécanique fourni par le moteur 13 et la turbine 19 n'ont été que schématiquement figurés pour des raisons de simplicité.

L'utilisation du récupérateur à cycle de Rankine permet d'améliorer notablement le rendement global de l'installation. La présence de ce récupérateur n'a, toutefois, qu'un caractère optionnel.

Il va de soi que le mode de réalisation décrit n'est qu'un exemple et qu'il serait possible de le modifier, notamment par substitution d'équivalents techniques, sans sortir pour cela du cadre de l'invention.

REVENDICATIONS DE BREVET

1.   Un procédé de gazéification du charbon ou de la biomasse,
caractérisé en ce qu'il comprend les étapes consistant:

a) à introduire dans une chambre de réaction (8) de l'hydrogène gazeux, de l'oxygène gazeux et de fines particules de charbon ou de biomasse, l'hydrogène étant présent en une proportion au moins stoechiométrique par rapport à la proportion d'oxygène,

b) à provoquer l'explosion du mélange d'hydrogène et d'oxygène, et

c) à retirer de la chambre de réaction un mélange formé principalement d'hydrogène et de monoxyde de carbone.

2. Un procédé selon la revendication 1, caractérisé en ce qu'on utilise comme chambre de réaction, la chambre (8) d'un moteur à explosion.

3. Un procédé selon la revendication 2, caractérisé en ce que le travail fourni par le moteur à explosion sert à broyer le charbon ou la biomasse en fines particules.

4. Une installation pour la mise en oeuvre du procédé de la revendication 3, caractérisée en ce qu'elle comprend, en combinaison :

- une unité (10) d'électrolyse de l'eau produisant de l'oxygène et de l'hydrogène gazeux;

- des moyens de broyage (14) du charbon ou de la biomasse en fines particules;

- des moyens (11, 12) pour amener de l'oxygène d'une part, et une suspension de fines particules de charbon ou de biomasse dans de l'hydrogène d'autre part, à la chambre d'un moteur à explosion;

- un moteur à explosion (13) comprenant au moins un cylindre et une chambre;

- des moyens (16) pour séparer des gaz de combustion les particules solides; et

- des moyens mécaniques (23) permettant d'utiliser le travail fourni par le moteur à explosion pour actionner lesdits moyens de broyage.

5. Une installation selon la revendication 4, caractérisée en ce qu'elle comprend, en outre, un système de récupération d'énergie (18, 17, 19, 20) à cycle de Rankine utilisant un fluide de travail organique qui est réchauffé et vaporisé par la chaleur dégagée par le moteur à explosion ainsi que par les gaz de combustion chauds sortant dudit moteur à explosion.

6. Une installation selon la revendication 5, caractérisée en ce que le fluide de travail organique sert à actionner une turbine (19).

0066498

# 0066498

Office européen
des brevets

**RAPPORT DE RECHERCHE EUROPEENNE**

Numéro de la demande

EP 82 40 0907

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 312 553 (NISSAN MOTOR) | | C 10 J 3/46<br>F 02 B 43/10<br>F 02 B 45/02 |
| A | US-A-4 099 489 (BRADLEY) | | |
| A | US-A-2 925 335 (DONATH) | | |
| A | FR-A-2 340 450 (SCHORNSTEIN) | | |
| A | FR-A- 774 014 (ERREN) | | |

---

|  |
|---|
| **DOMAINES TECHNIQUES RECHERCHES (Int. Cl. ³)** |
| C 10 J<br>F 02 B |

Le présent rapport de recherche a été établi pour toutes les revendications

| Lieu de la recherche<br>LA HAYE | Date d'achèvement de la recherche<br>16-08-1982 | Examinateur<br>WENDLING J.P. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82